# EUROPÄISCHE PATENTSCHRIFT

(11) **EP 2 517 549 B1**
(45) Veröffentlichungstag und Bekanntmachung des Hinweises auf die Patenterteilung: **04.11.2015**
(21) Anmeldenummer: 12161450.7
(22) Anmeldetag: 27.03.2012
(51) Int. Cl.: A01D 41/127, A01D 43/08, A01D 41/14

(54) **Anordnung und Verfahren zur Erfassung der Menge von Pflanzen auf einem Feld**
Assembly and method for detecting the quantity of plants on a field
Agencement et procédé de détection de la quantité de plantes sur un champ

(30) Priorität: 27.04.2011 DE 102011017621
(43) Veröffentlichungstag der Anmeldung: 31.10.2012
(73) Patentinhaber: Deere & Company, Moline, IL 61265-8098 (US)
(72) Erfinder: Peters, Ole, 25724 Neufeld (DE); Hahn, Klaus, 68199 Mannheim (DE); Leese, Stephen, 67661 Kaiserslautern (DE)
(74) Vertreter: Holst, Sönke

(56) Entgegenhaltungen:
- DE-A1- 10 214 648
- DE-A1- 10 346 541
- DE-A1-102008 043 716

## Beschreibung

Die Erfindung betrifft eine Anordnung zur Bestimmung der Menge an Pflanzen auf einem Feld.

### Stand der Technik

Bei Erntemaschinen ist zu Zwecken einer selbsttätigen Einstellung von Gutförder- und/oder Gutbearbeitungseinrichtungen eine Messung des Gutdurchsatzes sinnvoll. Der Gutdurchsatz wird häufig auch zu Zwecken der teilflächenspezifischen Bewirtschaftung gemessen. Weiterhin kann anhand des gemessenen Gutdurchsatzes die Vortriebsgeschwindigkeit der Erntemaschine auf einem Feld durch eine entsprechende Steuerung derart eingestellt werden, dass ein gewünschter Gutdurchsatz erreicht wird, der beispielsweise einer optimalen Auslastung der Erntemaschine entspricht. Es ist üblich, den Gutdurchsatz durch entsprechende Sensoren in der Erntemaschine zu ermitteln. Da die Messung erst erfolgt, nachdem das Gut von der Erntemaschine aufgenommen wurde, kann eine sprunghafte Änderung des Gutdurchsatzes bei derartigen Sensoren nicht mehr durch eine entsprechende Anpassung der Fahrgeschwindigkeit ausgeglichen werden, was eine Unter- oder Überlastung von Gutbearbeitungseinrichtungen oder sogar Verstopfungen zur Folge haben kann.

In der DE 102 14 648 A1 wird eine landwirtschaftliche Erntemaschine mit einer Messeinrichtung beschrieben, die den vor der Maschine liegenden Bereich des Feldes mit Radarstrahlen beaufschlagt und die Laufzeit der reflektierten Radarstrahlen erfasst. Da ein großer Anteil der Radarstrahlen das Blätterdach der Pflanzen durchdringt und erst durch den Erdboden reflektiert wird, wird der Abstand zum Erdboden gemessen. Anhand des Rauschanteils des empfangenen Radarsignals wird auch die Dichte bzw. die Feuchte des Erntegutes evaluiert. Zusätzlich zu dem mittig am Schneidwerk angebrachten Radarsensor kann ein Lasersensor vorgesehen sein, um ein Profil der Getreideoberfläche zu erfassen. Hier wird somit der Abstand zum Erdboden und zur Getreideoberfläche gemessen. Die Erfassung der Dichte und der Feuchtigkeit des Ernteguts allein anhand des Rauschanteils des empfangenen Radarsignals ist jedoch nicht immer hinreichend genau.

Die DE 10 2008 043 716 A1 beschreibt eine Vorrichtung zur Erfassung der Bestandsdichte von Pflanzen) auf einem Feld mit einem Sender, der elektromagnetische Wellen im sichtbaren oder nahinfraroten Bereich von der Maschine schräg nach vorn und unten auf einen vor der Maschine vorhandenen Pflanzenbestand abstrahlt und einem orts- und/oder winkelauflösend arbeitenden Empfänger, der von den Pflanzen des Pflanzenbestandes und/oder vom Erdboden reflektierte Wellen empfängt. Eine Auswertungseinrichtung ermittelt die Laufzeit der Wellen des Senders zum Empfänger an unterschiedlichen Punkten entlang einer quer zur Vorwärtsrichtung verlaufenden Messrichtung und bestimmt die Bestandsdichte der Pflanzen anhand der Variation der erfassten Laufzeiten. Die Erfassung der Bestandsdichte der Pflanzen beruht demnach darauf, dass bei dichten Beständen fast alle Wellen vom Blätterdach oder den Fruchtständen der Pflanzen reflektiert werden, was eine recht geringe Variation der der erfassten Laufzeiten bedeutet, während bei dünnen Beständen ein größerer Anteil der Wellen vom Erdboden reflektiert wird, was an den betreffenden Stellen wesentlich längere Laufzeiten des Lichts und größere Variationen der Laufzeiten entlang der Messrichtung zur Folge hat. Hier ist zwar eine Abschätzung der Dichte des Pflanzenbestandes möglich, als nachteilig ist aber anzusehen, dass bei dichteren Pflanzenbeständen keine genaue Erfassung der Höhe der Pflanzen möglich ist, da die Wellen dort nicht bis auf den Erdboden durchdringen, was sich insbesondere bei nicht ebenen Feldern als nachteilig erweist.

### Aufgabe

Die der Erfindung zu Grunde liegende Aufgabe wird darin gesehen, eine verbesserte Vorrichtung zur Erfassung der Menge von Pflanzen auf einem Feld bereitzustellen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

### Lösung

Eine Anordnung zur Erfassung des Volumens von Pflanzen auf einem Feld umfasst einen ersten Sender, der im Betrieb erste elektromagnetische Wellen im sichtbaren oder infraroten Bereich (insbesondere Laserstrahlen) auf einen Pflanzenbestand abstrahlt, einen ersten Empfänger, der für von den Pflanzen bzw. vom Erdboden reflektierte, ursprünglich vom Sender kommende erste Wellen sensitiv ist, und eine elektronische Auswertungseinrichtung. Dabei werden der Sender (oder seine Wellen) und der Empfänger in an sich bekannter Weise (s. EP 1 271 139 A2) gemeinsam schrittweise oder kontinuierlich entlang einer Messrichtung verschwenkt. Der Auswertungseinrichtung liegt eine Information vor, welchem Ort bzw. welchem Winkel ein vom ersten Empfänger erzeugtes Signal zuzuordnen ist. Die Pflanzen können beispielsweise als stehender, abzuerntender Bestand vorliegen oder als Schwad auf dem Erdboden liegen.

Die Auswertungseinrichtung ermittelt die Laufzeit der vom Sender bis zum Empfänger gelangenden Wellen, die aufgrund der bekannten, festen Lichtgeschwindigkeit eine Information über den Abstand des Reflexionspunkts vom Sender und Empfänger enthält. Derartige Abstandswerte werden für unterschiedliche Punkte ermittelt, die nebeneinander entlang der Messrichtung liegen, d. h. zur weiteren Auswertung in einem Speicher abgelegt. Die Messrichtung erstreckt sich quer zu einer Vorwärtsbewegungsrichtung der Vorrichtung und parallel zum Erdboden.

In der Auswertungseinrichtung ist demnach ein zumindest eindimensionales, so genanntes Entfernungsbild vorhanden, das die erfassten Abstände der Reflexionspunkte in der Messrichtung orts- oder winkelaufgelöst enthält. Auf einem Feld liegende oder stehende Pflanzen befinden sich näher an der Vorrichtung als der Erdboden. Anhand dieses Entfernungsbildes und der bekannten bzw. über geeignete Sensoren erfassten Geometrie des ersten Senders und ersten Empfängers (beispielsweise Anbringungshöhe und Abstrahl- und/oder Empfangsrichtung, vgl. EP 0 887 660 A2) wird ein erstes Höhenprofil ermittelt, das die Höhen der Oberseiten der Pflanzen, an denen die ersten Wellen reflektiert wurden, entlang der Messrichtung widerspiegelt. An den Punkten, an denen keine Pflanzen vorhanden sind, entspricht das erste Höhenprofil der Kontur des Erdbodens. Das erste Höhenprofil wird zunächst abgespeichert.

Falls der Pflanzenbestand relativ dicht ist, werden die Wellen aufgrund der großen Dichte des Pflanzenbestandes fast oder nur von den Pflanzen reflektiert. Die Laufzeiten der Wellen in der Messrichtung sind dann demnach relativ homogen, d. h. sie variieren nur geringfügig entlang der Messrichtung. Falls der Pflanzenbestand hingegen relativ dünn ist, dringt ein gewisser Anteil der Wellen bis zum Erdboden hin durch und wird durch diesen reflektiert. Andere Wellen werden jedoch durch mehr oder weniger weit vom Sender und Empfänger beabstandet stehende Pflanzen reflektiert. Es gibt dann - aufgrund der Lücken im Pflanzenbestand - demnach eine größere Variation in den Laufzeiten der Wellen in der Messrichtung. Die Auswertungseinrichtung determiniert die Dichte der Pflanzen anhand der Unterschiede (d. h. der Variation bzw. dem Streuungsmaß) der Laufzeiten der erfassten Signale in der Messrichtung. Dabei kann insbesondere die Standardabweichung der Laufzeiten erfasst werden, obwohl auch beliebige andere statistische Größen erfassbar sind, wie eine mittlere absolute Abweichung oder eine Spannweite (größter Unterschied zwischen den Laufzeiten bzw. Abständen). Der Zusammenhang zwischen der Variation der Laufzeiten und der Pflanzendichte kann für unterschiedliche Pflanzenarten und insbesondere Pflanzenhöhen unterschiedlich sein. Zur Berechnung der Pflanzendichte basierend auf der Variation der Laufzeiten können deshalb Kalibriertabellen, Formeln oder dergleichen verwendet werden, die auf zuvor durchgeführten Feldversuchen beruhen. Die Pflanzendichte gibt an, welcher Anteil der vertikalen, von den Pflanzen eingenommenen Fläche vor der Erntemaschine tatsächlich den Pflanzen zuordenbar ist.

Weiterhin ist zweiter Sender vorgesehen, der im Betrieb zweite elektromagnetische Wellen auf den Pflanzenbestand abstrahlt. Diese zweiten Wellen liegen in einem Wellenlängenbereich, der zu einem hinreichend großen Anteil den Pflanzenbestand durchdringt und erst vom Erdboden reflektiert wird. Ein derartiger Wellenlängenbereich ist beispielsweise der Radarwellenbereich, z. B. um die 24 GHz. Ein zweiter Empfänger ist für die zweiten Wellen sensitiv und empfängt somit die vom Erdboden reflektierten zweiten Wellen. Die Auswertungseinrichtung ermittelt an unterschiedlichen Punkten entlang der Messrichtung jeweils eine zweite Laufzeit der reflektierten zweiten Wellen des zweiten Senders zum zweiten Empfänger, wobei ebenfalls die bekannte bzw. über geeignete Sensoren erfasste Geometrie des zweiten Senders und zweiten Empfängers (beispielsweise Anbringungshöhe und Abstrahl- und/oder Empfangsrichtung) berücksichtigt wird. Diese zweiten Laufzeiten ermöglichen die Erstellung eines zweiten Höhenprofils, das die Kontur des Erdbodens unterhalb der Pflanzen entlang der Messrichtung wiedergibt.

Die Auswertungseinrichtung bestimmt unter Verwendung des ersten Höhenprofils und des zweiten Höhenprofils die Höhen der Pflanzen. Die Pflanzenhöhen werden dann mit der Dichte der Pflanzen multipliziert und über die Messrichtung integriert (oder umgekehrt), um die Menge der Pflanzen in Form der von den Pflanzen belegten vertikalen Querschnittsfläche zu bestimmen. Im Rahmen des erfindungsgemäßen Gedankens wird unter der Menge der Pflanzen eine beliebige Messgröße verstanden, die sich auf das Volumen der Pflanzen und/oder die von den Pflanzen belegte vertikale Querschnittsfläche bezieht.

Auf diese Weise wird eine relativ genaue Erfassung der Menge der Pflanzen ermöglicht.

Die Dichte des Pflanzenbestandes kann auch anhand der Laufzeiten von zweiten Wellen ermittelt werden, die von Pflanzen reflektiert werden. Die von den zweiten Wellen beaufschlagten Pflanzen liefern ein Echo, das zeitlich vor den vom Erdboden reflektierten zweiten Wellen liegt und dessen Intensität und/oder entlang der Messrichtung auftretenden Laufzeitunterschiede ebenfalls eine Information über die Pflanzendichte enthalten. Diese Information wird vorzugsweise von der Auswertungseinrichtung evaluiert und gemeinsam mit der anhand der Laufzeitunterschiede der ersten Wellen festgestellten Dichte der Pflanzen bei der Bestimmung der Pflanzenmenge berücksichtigt.

Die erwähnten, von den Pflanzen reflektierten zweiten Wellen enthalten auch Informationen über die Massendichte der Pflanzen, die somit von der Auswertungseinrichtung anhand der Intensitäten und/oder Laufzeiten der zweiten Wellen ermittelt werden kann. Alternativ oder zusätzlich können die Intensitäten der ersten Wellen durch die Auswertungseinrichtung zur Bestimmung der Massendichte der Pflanzen herangezogen werden. Anhand der Massendichte (in Einheiten von Kilogramm pro Kubikmeter o. dgl.) kann wiederum die Masse der Pflanzen bestimmt werden.

Die Auswertungseinrichtung ist, wie oben dargelegt, zur Erkennung von Bestandsgrenzen geeignet. Sie kann somit mit einer Lenkeinrichtung verbunden sein und eine Erntemaschine selbsttätig entlang einer Bestandskante führen. Anhand der vorausschauend gemessenen Bestandsdichte kann bei bekannter Breite der Gutaufnahmeeinrichtung die zu erwartende Auslastung der Erntemaschine und/oder die zu einer erwünschten Auslastung führende Vortriebsgeschwindigkeit bestimmt werden. Die Messung erfolgt zweckmäßigerweise im Abstand vor einer Erntemaschine, so dass bei Pflanzenbestandsdichtenänderungen eine rechtzeitige Anpassung der Vortriebsgeschwindigkeit möglich wird. Dies erhöht den Fahrkomfort und vermeidet kritische Situationen, in denen die Maschine zum Stopfen neigt. Auch können die Förder- und Trennprozesse in einer Erntemaschine rechtzeitig an die kommenden Durchsätze angepasst werden, so dass sich das Ernteergebnis verbessert. Besonderes Augenmerk liegt auf der Vermeidung von Verstopfungen durch übermäßigen Gutdurchsatz. Die von der Auswertungseinrichtung bereitgestellten Mengenwerte können somit zur Einstellung der Geschwindigkeit einer Gutfördereinrichtung (beispielsweise eines Schrägförderers) oder von Parametern von Gutbearbeitungseinrichtungen (z. b. Dreschtrommelspalt, Dreschtrommeldrehzahl) dienen. Auch zur georeferenzierten Erfassung der Erntegutmengen zu Zwecken der teilflächenspezifischen Bewirtschaftung können die Mengenwerte dienen.

Die vorliegende Erfindung ermöglicht es auch, die anhand der Daten des zweiten Sensors ermittelte Feuchte des Ernteguts zu berücksichtigen, denn trockenes Erntegut lässt sich leichter dreschen und trennen als feuchtes Erntegut. Bei der Bestimmung der Vortriebsgeschwindigkeit kann somit der Durchsatz anhand der Feuchte korrigiert werden (oder die Geschwindigkeit wird direkt anhand der Feuchte korrigiert). Als Eingangsgröße der Geschwindigkeitsregelung kann daher beispielsweise ein anhand der Feuchte korrigierter Durchsatz oder eine aus dem anhand der Feuchte korrigierten Durchsatz ermittelte Belastung der Reinigung oder ein aus dem anhand der Feuchte korrigierten Durchsatz ermittelter Verlust der Reinigung dienen. Der Verlust der Reinigung kann mit absoluten Verlustinformationen kalibriert werden, die mittels geeigneter Sensoren oder Verlustprüfschalen gewonnen werden können.

Weiterhin enthalten die Ausgangssignale der Auswertungseinrichtung Informationen über die Höhe des Bestands und des Erdbodens vor der Erntemaschine, die zur selbsttätigen Einstellung einer Erntegutaufnahmeeinrichtung verwendet werden können, bei einem Schneidwerk beispielsweise der Haspelhöhe, -geschwindigkeit und/oder -position in Vorwärtsrichtung. Auch liegende Pflanzen (Lagergetreide) können auf diese Weise erkannt werden, so dass die Erntegutaufnahmeeinrichtung wie erwähnt entsprechend verstellt werden kann, um diese Pflanzen optimal aufnehmen zu können. Weiterhin erlaubt das zweite Höhenprofil eine selbsttätige, vorausschauende Einstellung der Höhe der Erntegutaufnahmeeinrichtung über dem Erdboden und somit der Schnitthöhe.

Da das erste und zweite Höhenprofil (je nach Geometrie der Sender und Empfänger) in der Regel in unterschiedlichen Abständen vor den Sendern und Empfängern aufgenommen werden, bietet es sich ggf. an, das zeitlich eher oder weiter vorn aufgenommene Höhenprofil (hier handelt es sich in der Regel um das zweite Höhenprofil) zwischenzuspeichern, um den vertikalen Abstand zu einem möglichst genau vertikal darüber liegenden, später aufgenommenen Höhenprofil und somit die Pflanzenhöhe möglichst genau zu ermitteln.

Die erfindungsgemäße Vorrichtung kann insbesondere an selbstfahrenden oder von einem Fahrzeug gezogenen oder daran angebauten Erntemaschinen Verwendung finden, beispielsweise Mähdreschern, Ballenpressen oder Feldhäckslern.

### Ausführungsbeispiel

In den Zeichnungen ist ein nachfolgend näher beschriebenes Ausführungsbeispiel der Erfindung dargestellt. Es zeigt:
- Fig. 1: eine Seitenansicht einer Erntemaschine mit einer erfindungsgemäßen Vorrichtung zur Messung der Menge von auf einem Feld stehenden Pflanzen, und
- Fig. 2: ein Flussdiagramm, nach dem die Vorrichtung arbeitet.

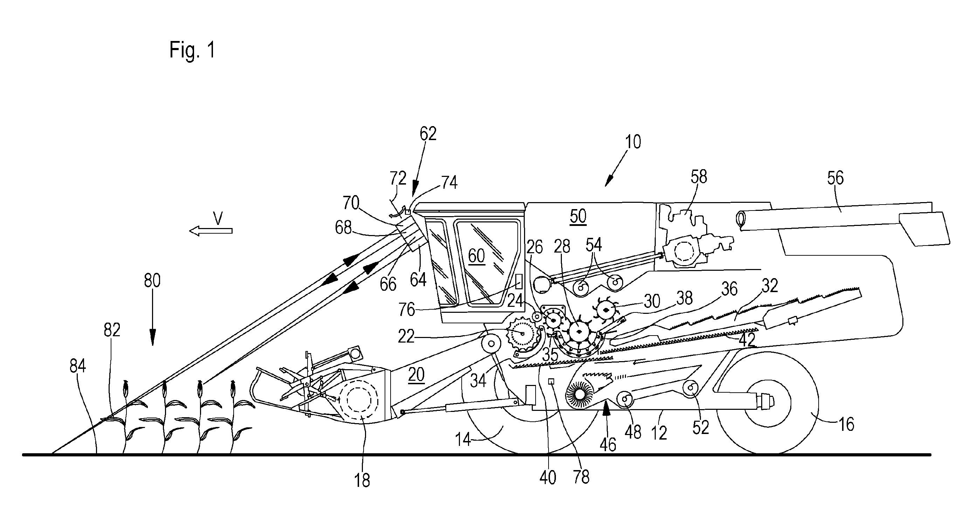

Die Figur 1 zeigt eine Erntemaschine in Form eines selbstfahrenden Mähdreschers 10 mit einem Rahmen 12, der sich über angetriebene vordere Räder 14 und lenkbare rückwärtige Räder 16 auf dem Boden abstützt und von diesen fortbewegt wird. Die Räder 14 werden mittels nicht gezeigter Antriebsmittel in Drehung versetzt, um den Mähdrescher 10 z. B. über ein abzuerntendes Feld zu bewegen. Im Folgenden beziehen sich Richtungsangaben, wie vorn und hinten, auf die Fahrtrichtung V des Mähdreschers 10 im Erntebetrieb.

An den vorderen Endbereich des Mähdreschers 10 ist eine Erntegutbergungsvorrichtung 18 in Form eines Schneidwerks abnehmbar angeschlossen, um beim Erntebetrieb Erntegut in Form von Getreide oder andere, dreschbare Halmfrüchten von dem Feld zu ernten und es nach oben und hinten durch einen Schrägförderer 20 einem Mehrtrommeldreschwerk zuzuführen, das - in Fahrtrichtung V hintereinander angeordnet - eine Dreschtrommel 22, eine Abstreiftrommel 24, eine oberschlächtig arbeitende Fördertrommel 26, einen Tangentialseparator 28 sowie eine Wendetrommel 30 umfasst. Stromab der Wendetrommel 30 befindet sich ein Strohschüttler 32. Die Dreschtrommel 22 ist in ihrem unteren und rückwärtigen Bereich von einem Dreschkorb 34 umgeben. Unterhalb der Fördertrommel 26 ist eine mit Öffnungen versehene oder geschlossene Abdeckung 35 angeordnet, während sich oberhalb der Fördertrommel 26 eine fest stehende Abdeckung und unterhalb des Tangentialseparators 28 ein Separierkorb 36 mit verstellbaren Fingerelementen befindet. Unterhalb der Wendetrommel 30 ist ein Fingerrechen 38 angeordnet.

Das durch den Dreschkorb 34, den Separierkorb 36 und die Strohschüttler 32 hindurchtretende, Körner und Verunreinigungen enthaltende Gemisch gelangt über Förderböden 40, 42 in eine Reinigungseinrichtung 46. Durch die Reinigungseinrichtung 46 gereinigtes Getreide wird mittels einer Körnerschnecke 48 einem nicht gezeigten Elevator zugeführt, der es in einen Korntank 50 befördert. Eine Überkehrschnecke 52 gibt unausgedroschene Ährenteile durch einen weiteren nicht gezeigten Elevator zurück in den Dreschprozess. Die Spreu kann an der Rückseite der Siebeinrichtung durch einen rotierenden Spreuverteiler ausgeworfen werden, oder sie wird durch einen stromab des Strohschüttlers 32 angeordneten Strohhäcksler (nicht eingezeichnet) ausgetragen. Das gereinigte Getreide aus dem Korntank 50 kann durch ein Entladesystem mit Querschnecken 54 und einem Entladeförderer 56 entladen werden.

Die genannten Systeme werden mittels eines Verbrennungsmotors 58 angetrieben und von einem Bediener aus einer Fahrerkabine 60 heraus kontrolliert und gesteuert. Die verschiedenen Vorrichtungen zum Dreschen, Fördern, Reinigen und Abscheiden befinden sich innerhalb des Rahmens 12. Außerhalb des Rahmens 12 befindet sich eine Außenhülle, die größtenteils aufklappbar ist. Es bleibt anzumerken, dass das hier dargestellte Mehrtrommeldreschwerk nur ein Ausführungsbeispiel ist. Es könnte auch durch eine einzige quer angeordnete Dreschtrommel und eine nachgeordnete Trenneinrichtung mit einem Strohschüttler oder einem oder mehreren Trennrotoren oder eine im Axialfluss arbeitende Dresch- und Trenneinrichtung ersetzt werden.

An der Vorderseite der Fahrerkabine 60 ist unterhalb des Daches eine Messeinrichtung 62 angeordnet, die mit einer Auswertungseinrichtung 76 verbunden ist. Die Messeinrichtung 62 könnte auch an der Erntegutbergungseinrichtung 18 angebracht werden. Die Auswertungseinrichtung 76 ist mit einer Geschwindigkeitsvorgabeeinrichtung 78 (beispielsweise eine Verstelleinrichtung für eine Taumelscheibe einer Hydraulikpumpe, die hydraulikflüssigkeitsleitend mit einem Hydraulikmotor verbunden ist, der die Räder 14 antreibt) verbunden, die zur Einstellung der Vortriebsgeschwindigkeit der Erntemaschine 10 eingerichtet ist.

Die Messeinrichtung 62 setzt sich aus einem ersten Sender 64, einem ersten Empfänger 66, einem zweiten Sender 68 und einem zweiten Empfänger 70 zusammen, die gemeinsam durch einen Schwenkantrieb 74 um eine etwa vertikale, leicht nach vorn geneigte Achse 72 drehbar sind. Im Betrieb überstreichen von den Sendern 64, 68 ausgesendete elektromagnetische Wellen einen vor der Messbereich vor dem Mähdrescher 10, indem die Sender 64, 68 und Empfänger 66, 70 (oder lediglich ihre Wellen abstrahlenden und/oder empfangenden Elemente) um die Achse 72 verschwenkt werden. Dadurch wird das Feld 80 mit den darauf stehenden Pflanzen 82 entlang einer Messrichtung, die sich in einem kreissegmentförmigen Bogen vor dem Mähdrescher 10 erstreckt, sukzessive überstrichen.

Der erste Sender 64 strahlt elektromagnetische erste Wellen in Form von Licht im (nah-) infraroten oder sichtbaren Wellenbereich aus, während der erste Empfänger 66 nur für dieses Licht sensitiv ist. Aufgrund der gewählten Wellenlänge wird das Licht von den Pflanzen 82 reflektiert, wenn es auf sie trifft. Wenn das Licht hingegen zwischen Pflanzen hindurch (z. b. in dünnen oder fehlenden Beständen) auf den Erdboden 84 trifft, wird es auch vom Erdboden reflektiert. Der erste Sender 64 umfasst vorzugsweise einen Laser zur Erzeugung des Lichts.

Der zweite Sender 68 strahlt elektromagnetische zweite Wellen im Mikro- oder Radarwellenbereich ab, während der zweite Empfänger 70 nur für diese Wellen empfindlich ist. Die Wellenlänge ist derart gewählt, dass der größte Teil der zweiten Wellen die Pflanzen durchdringt und nur vom Erdboden 84 reflektiert wird. Ein kleinerer Anteil der zweiten Wellen wird auch von den Pflanzen 82 reflektiert.

Die von den Sendern 64, 68 abgestrahlten elektromagnetischen Wellen erreichen den Erdboden 84 im Abstand von einigen Metern (beispielsweise 10 m) in der Fahrtrichtung des Mähdreschers 10 vor der Erntegutbergungsvorrichtung 18. Die von den Sendern 64, 68 abgestrahlten Wellen können amplituden- oder anderweitig moduliert sein, um das Signal/Rausch-Verhältnis zu verbessern. Über eine Laufzeitmessung bewerkstelligt die Auswertungseinrichtung 76 eine Erfassung des Abstands zwischen der Messeinrichtung 62 und dem Punkt, an dem die Wellen jeweils reflektiert wurden. Der Schwenkantrieb 74 kann als Servo- oder Schrittmotor ausgeführt sein und verschwenkt die Messeinrichtung 62 (oder lediglich ihre Wellen abstrahlenden und/oder empfangenden Elemente) kontinuierlich oder schrittweise um einen Winkelbereich von beispielsweise 30° um die Achse 72 hin und her. Die Auswertungseinrichtung 76 ist eingerichtet, für jeden Schwenkwinkel der Messeinrichtung 62 den jeweiligen Winkel um die Achse 72 und die Laufzeit der Welle bzw. den Abstand des Empfängers 66, 70 und Senders 64, 68 vom Reflexionspunkt zu erfassen. Anschließend wird der Schwenkantrieb 74 aktiviert und die Messeinrichtung 62 in eine andere Stellung verbracht. Der Auswertungseinrichtung 74 liegt eine Information über den jeweiligen Winkel des der Messeinrichtung 62 vor, da sie den Schwenkantrieb 74 steuert. Denkbar wäre auch ein separater Sensor zur Erfassung des Schwenkwinkels, wobei der Servo- oder Schrittmotor durch einen beliebigen Motor ersetzt werden kann. Der Winkel der Messeinrichtung 62 um die Achse 72 definiert eine Messrichtung, entlang der die Laufzeiten der Wellen der Senders 64, 68 zum zugehörigen Empfänger 66, 70 ermittelt werden. Sie erstreckt sich horizontal und kreisbogenförmig quer zur Vorwärtsrichtung der Erntemaschine 10.

Die Signale des ersten Empfängers 66 enthalten eine Information über die Höhe der oberen Enden der Pflanzen 82, denn dort werden sie in erster Linie reflektiert. Einige erste Wellen dringen jedoch in dünneren Beständen weiter nach unten vor, zum Teil bis zum Erdboden 84, und werden erst dort reflektiert und vom ersten Empfänger 66 empfangen. In dünneren Beständen variieren die vom ersten Empfänger 66 erfassten Abstände demnach stärker als in dichteren Beständen. Diese unterschiedlichen, von der Bestandsdichte abhängigen Variationen der Abstände werden von der Auswertungseinrichtung 74 evaluiert und zur Bestimmung der Dichte des Pflanzenbestandes herangezogen. Weiterhin dienen die Messwerte des zweiten Empfängers 70 zur Bestimmung eines Bodenprofils, das in Verbindung mit den mit dem ersten Empfänger 66 erfassten Höhen der Oberseiten der Pflanzen 82 zu einer genaueren Bestimmung der Pflanzenhöhen verwendet wird, welche ebenfalls zur Bestimmung der Pflanzenmenge herangezogen werden.

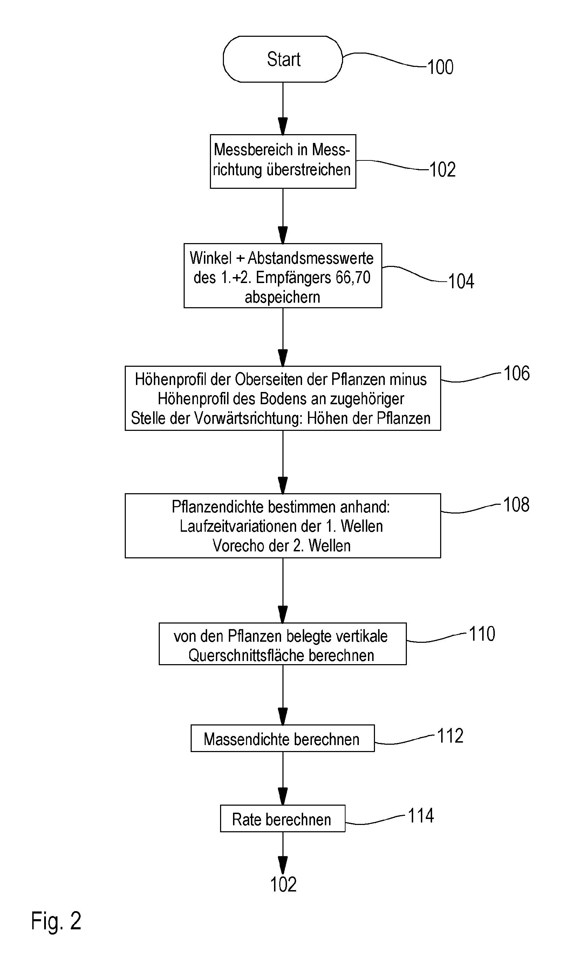

In der Figur 2 ist ein Flussdiagramm dargestellt, nach dem die Auswertungseinrichtung 76 arbeitet. Nach dem Start in Schritt 100 veranlasst im Schritt 102 die Auswertungseinrichtung 76 den Schwenkantrieb 74, mit der Messeinrichtung 62 einen bestimmten Winkelbereich vor der Erntemaschine 10 stufenweise (oder kontinuierlich) zu überstreichen. Dabei werden im Schritt 104 die jeweiligen Schwenkwinkel und Abstandsmesswerte durch die Auswertungseinrichtung 76 abgespeichert.

Im Schritt 106 wird ein Profil der Pflanzenhöhen entlang der Messrichtung errechnet. Dazu werden die (auf Reflexionen an Oberseiten von Pflanzen 82 zurückgehenden, was in etwa anhand der Laufzeit abgeschätzt werden kann) Abstandswerte des ersten Empfängers 66 zunächst in die Höhen der Oberseiten der Pflanzen 82 umgerechnet, was anhand der bekannten Geometrie (Höhe der Messeinrichtung 62 über dem Erdboden 84 und des Abstrahlwinkels der Wellen gegenüber dem Erdboden) erfolgt. Analog werden die Abstandswerte des zweiten Empfängers 70 in die Höhen des Erdbodens 84 umgerechnet, was anhand der bekannten Geometrie (Höhe der Messeinrichtung 62 über dem Erdboden 84 und des Abstrahlwinkels der Wellen gegenüber dem Erdboden) erfolgt. Schließlich werden die Höhen des Erdbodens von den Höhen der Oberseiten der Pflanzen abgezogen, um das Profil der Pflanzenhöhen zu erzeugen. Da die ersten Wellen jedoch weiter vorn als die zweiten Wellen reflektiert werden (vgl. Figur 1), sind die mit dem zweiten Empfänger 70 erfassten Höhen des Erdbodens 84 zunächst zwischenzuspeichern, bis in Vorwärtsrichtung genau vertikal übereinander liegende Höhenprofile der Oberseiten der Pflanzen 82 und des Erdbodens 84 voneinander abgezogen werden.

Im Schritt 108 werden die Dichten des Pflanzenbestandes ermittelt. Dazu dienen einerseits die Variationen (Laufzeitunterschiede) der vom ersten Empfänger 66 aufgenommenen Wellen, denn, wie oben erläutert, diese Variationen sind bei dichten Beständen kleiner als bei dünnen Beständen. Hierzu wird auf die Offenbarung der DE 10 2008 043 716 A1 verwiesen. Andererseits werden auch vom zweiten Empfänger 70 aufgenommene Vorechos berücksichtigt, denn diese werden durch Reflexion der zweiten Wellen an den Pflanzen 82 bedingt, die zeitlich vor dem Einlaufen der am Erdboden 84 reflektierten zweiten Wellen beim zweiten Empfänger 70 liegen. Diese Dichten des Pflanzenbestandes sind einheitslos und können beispielsweise in Einheiten von Prozenten gemessen werden. Sie geben an, welcher Anteil der von den Pflanzen 82 umhüllten, erfassten vertikalen Querschnittsfläche der Pflanzen 82 vor der Messeinrichtung 62 tatsächlich durch Pflanzen 82 eingenommen wird.

Anhand der Pflanzenhöhen aus Schritt 106 und der Pflanzendichten aus Schritt 108 wird dann im Schritt 110 die von Pflanzen 82 belegte vertikale Querschnittsfläche vor der Erntemaschine 10 (durch Multiplizieren der Pflanzenhöhen mit der Pflanzendichte und Integration über die Messrichtung oder umgekehrt) ermittelt. Diese Querschnittsfläche hat die Dimension einer Fläche und kann durch eine weitere Integration entlang der Vorwärtsrichtung in ein Volumen und durch Multiplizieren mit der Vortriebsgeschwindigkeit in eine Volumenrate umgerechnet werden.

Im Schritt 112 wird dann die Massendichte der Pflanzen 82 bestimmt, d. h. ihre auf das Volumen bezogene Masse. Hierzu können die Intensitäten der vom ersten Empfänger 66 empfangenen Wellen berücksichtigt werden (grüne Pflanzen haben in der Regel eine höhere Dichte als trockene, braune Pflanzen, vgl. EP 1 271 139 A2) und/oder die Intensitäten der Vorechos der zweiten Wellen, wie bezüglich des Schritts 108 beschrieben.

Anhand der Massendichte aus Schritt 112, der von Pflanzen belegten vertikalen Querschnittsfläche aus Schritt 110 und der Vortriebsgeschwindigkeit wird im Schritt 114 die Rate der vom Mähdrescher 10 aufgenommenen Pflanzen 82 (in Einheiten von kg/s) bestimmt. Da dieser Wert vorausschauend bestimmt wird, kann er von der Auswertungseinrichtung 76 mittels der Geschwindigkeitsvorgabeeinrichtung 78 zur selbsttätigen Einstellung der Vortriebsgeschwindigkeit des Mähdreschers 10 genutzt werden. An dieser Stelle kann auch die Feuchtigkeit des Ernteguts berücksichtigt werden, die im Schritt 108 anhand der Signale des zweiten Empfängers 70 ermittelt werden kann, dessen Vorechos nicht nur von der Dichte des Pflanzenbestandes, sondern auch von der Feuchte der Pflanzen abhängen. Der Durchsatz (ggf. anhand der Feuchte korrigiert) kann direkt in einen Vortriebsgeschwindigkeitswert umgerechnet werden, oder er (ggf. anhand der Feuchte korrigiert) wird zunächst in eine Belastung der Reinigung umgerechnet, die zur Bestimmung der Vortriebsgeschwindigkeit herangezogen wird, oder er (ggf. anhand der Feuchte korrigiert) wird zunächst in einen Verlustwert der Reinigung umgerechnet, der zur Bestimmung der Vortriebsgeschwindigkeit herangezogen wird. Der Verlustwert kann anhand geeigneter Sensoren, die direkt die Verluste erfassen, oder einer Prüfschale kalibriert werden.

Außerdem kann der Durchsatz (insbesondere bei konstanten Vortriebsgeschwindigkeiten, die zu zeitlich variierenden Durchsätzen führen) zur selbsttätigen Einstellung von Einrichtungen des Mähdreschers 10 genutzt werden, wie dem Dreschtrommelspalt oder der Dreschtrommeldrehzahl oder zur Einstellung der Drehzahl des Reinigungsgebläses oder der Sieböffnung. Die Messwerte des ersten Empfängers 66 können auch zur selbsttätigen Lenkung des Mähdreschers 10 herangezogen werden. Die mit den Signalen des zweiten Empfängers 70 erzeugten Höhenprofile des Erdbodens 84 können zu einer vorausschauenden, selbsttätigen Höhensteuerung der Erntegutbergungsvorrichtung 18 herangezogen werden.

Auf Schritt 114 folgt wieder Schritt 102. Die durch Integration der im Schritt 114 ermittelten Raten bestimmbaren Pflanzenmassen können für Zwecke der Präzisionslandwirtschaft mittels der Positionssignale eines satellitenbasierten Positionsbestimmungssystems (nicht gezeigt) georeferenziert abgespeichert werden.

Die vorliegende Erfindung eignet sich nicht nur für stehende Pflanzen, wie zuvor beschrieben, sondern auch für in einem Schwad liegende Pflanzen.

## Patentansprüche

1. Anordnung zur Bestimmung der Menge an Pflanzen (82) auf einem Feld (80), mit:
einem ersten Sender (64), der betreibbar ist, erste elektromagnetische Wellen im sichtbaren oder infraroten Wellenlängenbereich auf einen Pflanzenbestand auf einem Feld (80) abzustrahlen,
einem ersten Empfänger (66), der betreibbar ist, von den Pflanzen (82) des Pflanzenbestandes reflektierte erste Wellen zu empfangen, wobei der erste Sender (64) und der erste Empfänger (66) gemeinsam um eine etwa vertikale, leicht nach vorn geneigte Achse (72) durch einen Schwenkantrieb (74) schwenkbar an der Erntemaschine (10) oder einer Erntegutbergungseinrichtung (18) angebracht sind,
einer Auswertungseinrichtung (76), die betreibbar ist, an unterschiedlichen Punkten entlang einer sich quer zu einer Vorwärtsbewegungsrichtung der Anordnung und parallel zum Erdboden (84) erstreckenden Messrichtung jeweils eine erste Laufzeit der reflektierten ersten Wellen des ersten Senders (64) zum ersten Empfänger (66) zu ermitteln und damit ein erstes Höhenprofil der Oberflächen der Pflanzen (82) entlang der Messrichtung zu bestimmen sowie die Dichte der Pflanzen (82) anhand des von der Dichte des Pflanzenbestandes abhängigen Streuungsmaßes der erfassten Laufzeiten der reflektierten ersten Wellen des ersten Senders (64) zum ersten Empfänger (66) entlang der Messrichtung zu bestimmen,
einem zweiten Sender (68), der betreibbar ist, zweite elektromagnetische, zu einem signifikanten Anteil den Pflanzenbestand durchdringende und vom Erdboden (84) reflektierte Wellen auf den Pflanzenbestand abzustrahlen, und
einem zweiten Empfänger (70), der eingerichtet ist, vom Erdboden (84) reflektierte zweite Wellen zu empfangen, wobei der zweite Sender (68) und der zweite Empfänger (70) gemeinsam mit dem ersten Sender (64) und dem ersten Empfänger (66) durch den Schwenkantrieb (74) um die Achse (72) schwenkbar angebracht sind,
wobei die Auswertungseinrichtung (76) betreibbar ist, an unterschiedlichen Punkten entlang der Messrichtung jeweils eine zweite Laufzeit der reflektierten zweiten Wellen des zweiten Senders (68) zum zweiten Empfänger (70) zu ermitteln und damit ein zweites Höhenprofil des Erdbodens (84) unterhalb der Pflanzen (82) entlang der Messrichtung zu bestimmen,
und wobei die Auswertungseinrichtung (76) betreibbar ist, anhand des ersten Höhenprofils, des zweiten Höhenprofils und der Dichte der Pflanzen (82) die Menge der Pflanzen (82) zu bestimmen.

2. Anordnung nach Anspruch 1, wobei die Auswertungseinrichtung (76) betreibbar ist, bei der Bestimmung der Menge der Pflanzen (72) auch eine Dichte der Pflanzen (82) zu berücksichtigen, die anhand von Intensitäten und/oder Laufzeiten von zweiten Wellen ermittelt wird, welche an Pflanzen (82) reflektiert werden.

3. Anordnung nach Anspruch 1 oder 2, wobei die Auswertungseinrichtung (76) betreibbar ist, die Massendichte der Pflanzen (82) anhand von Intensitäten und/oder Laufzeiten von zweiten Wellen, die an Pflanzen (82) reflektiert werden, und/oder der Intensitäten der empfangenen ersten Wellen zu ermitteln und zu einer Bestimmung der Masse der Pflanzen (82) anhand der bestimmten Menge der Pflanzen zu verwenden.

4. Anordnung nach einem der vorhergehenden Ansprüche, wobei die zweiten Wellen Radar- oder Mikrowellen sind.

5. Anordnung nach einem der Ansprüche 1 bis 4, wobei die Auswertungseinrichtung (76) mit einer Lenkeinrichtung und/oder einer Geschwindigkeitsvorgabeeinrichtung (78) und/oder einer Einrichtung zur Einstellung einer Erntegutaufnahmeeinrichtung (18) und/oder Gutbearbeitungs- und/oder Gutfördereinrichtung und/oder einer Aufzeichnungseinrichtung zur insbesondere georeferenzierten Aufzeichnung der Bestandsdichten und/oder Mengenwerte und/oder abgeernteten Fläche verbunden ist.

6. Anordnung nach einem der Ansprüche 1 bis 5, wobei das erste und zweite Höhenprofil aufgrund der Geometrie der Anbringung der Sender (64, 68) und Empfänger (66,70) in unterschiedlichen Abständen vor den Sendern (64, 68) und Empfängern (66, 70) aufgenommen werden und die Auswertungseinrichtung (76) betreibbar ist, das zeitlich eher oder weiter vorn aufgenommene Höhenprofil zwischenzuspeichern, um den vertikalen Abstand zu einem möglichst genau vertikal darüber liegenden, später aufgenommenen Höhenprofil und somit die Pflanzenhöhe möglichst genau zu ermitteln.

7. Erntemaschine (10) mit einer Anordnung nach einem der Ansprüche 1 bis 6.

## Claims

1. Assembly for detecting the quantity of plants (82) in a field (80), having:
a first transmitter (64) which can be operated to irradiate first electromagnetic waves in the visible or infrared wavelength range onto a crop in a field (80),
a first receiver (66) which can be operated to receive first waves reflected from the plants (82) of the crop, wherein the first transmitter (64) and the first receiver (66) are mounted together on the harvesting machine (10) or a harvesting device (18) so as to be pivotable about an approximately vertical, slightly forward-aligned axis (72) by means of a pivoting drive (74),
an evaluation device (76) which can be operated to acquire, at different points in a measuring direction extending transversely with respect to a forward movement direction of the assembly and parallel to the ground (84), in each case a first transit time of the reflected first waves of the first transmitter (64) to the first receiver (66) and therefore to determine a first height profile of the surfaces of the plants (82) in the measuring direction, and to determine the density of the plants (82) by reference to the degree of scattering, dependent on the density of the crop, of the detected transit times of the reflected first waves of the first transmitter (64) to the first receiver (66) in the measuring direction,
a second transmitter (68) which can be operated to irradiate second electromagnetic waves onto the crop, a significant proportion of which waves penetrates the crop and is reflected by the ground (84), and
a second receiver (70) which is configured to receive second waves reflected by the ground (84), wherein the second transmitter (68) and the second receiver (70) are mounted, together with the first transmitter (64) and the first receiver (66), so as to be pivotable about the axis (72) by means of the pivoting drive (74),
wherein the evaluation device (76) can be operated to acquire, at different points in the measuring direction, in each case a second transit time of the reflected second waves of the second transmitter (68) to the second receiver (70), and therefore to determine a second height profile of the ground (84) underneath the plants (82) in the measuring direction,
and wherein the evaluation device (76) can be operated to determine the quantity of the plants (82) by reference to the first height profile, the second height profile and the density of the plants (82).

2. Assembly according to Claim 1, wherein the evaluation device (76) can be operated also to determine, during the determination of the quantity of the plants (72), a density of the plants (82) which is acquired by reference to intensities and/or transit times of second waves which are reflected at plants (82).

3. Assembly according to Claim 1 or 2, wherein the evaluation device (76) can be operated to acquire the mass density of the plants (82) by reference to intensities and/or transit times of second waves which are reflected at plants (82), and/or by reference to the intensities of the received first waves, and to use them to determine the mass of the plants (82) by reference to the determined quantity of the plants.

4. Assembly according to one of the preceding claims, wherein the second waves are radar waves or microwaves.

5. Assembly according to one of Claims 1 to 4, wherein the evaluation device (76) is connected to a steering device and/or to a speed-predefining device (78) and/or to a device for setting a harvested material-pickup device (18) and/or material-processing and/or material-feeding device and/or a recording device for, in particular, geo-referenced recording of the crop densities and/or quantity values and/or harvested area.

6. Assembly according to one of Claims 1 to 5, wherein the first and second height profiles are recorded on the basis of the geometry of the attachment of the transmitters (64, 68) and receivers (66, 70) at different distances in front of the transmitters (64, 68) and receivers (66, 70), and the evaluation device (76) can be operated to buffer the height profile which is recorded chronologically sooner or further away, in order to acquire the vertical distance from a vertical profile which is recorded later and is as far as possible precisely vertically above the latter, and therefore to acquire the height of the plants as precisely as possible.

7. Harvesting machine (10) having an assembly according to one of Claims 1 to 6.

## Revendications

1. Equipement pour la détermination de la quantité de plantes (82) sur un champ (80), comprenant:
un premier émetteur (64) pouvant être commandé de manière à rayonner des premières ondes électromagnétiques dans des domaines de longueurs d'onde visibles ou infrarouges vers un couvert végétal sur un champ (80),
un premier récepteur (66) pouvant être commandé pour recevoir des premières ondes réfléchies par les plantes (82) du couvert végétal, dans lequel le premier émetteur (64) et le premier récepteur (66) sont montés de manière à pouvoir être orientés en commun autour d'un axe (72) sensiblement vertical légèrement incliné vers l'avant par un dispositif d'orientation (74) sur la moissonneuse (10) ou sur un dispositif de collecte de produits de moissonnage (18),
un dispositif d'évaluation (76) pouvant être mis en fonctionnement pour estimer respectivement, en différents points le long d'une direction de mesure s'étendant transversalement à une direction de déplacement vers l'avant de l'équipement et parallèlement au sol (84), un premier temps de propagation des premières ondes réfléchies du premier émetteur (64) au premier récepteur (66) et pour ainsi déterminer un premier profil de hauteur de la surface des plantes (82) le long de la direction de mesure ainsi que la densité des plantes (82) sur la base de la mesure de dispersion dépendant de la densité du couvert végétal des temps de propagation des premières ondes réfléchies du premier émetteur (64) au premier récepteur (66) le long de la direction de mesure,
un second émetteur (68) pouvant être mis en fonctionnement pour rayonner des secondes ondes électromagnétiques traversant une partie significative du couvert végétal et réfléchies par le sol (84) sur le couvert végétal, et
un second récepteur (70) conçu pour recevoir des secondes ondes réfléchies par le sol (84), dans lequel le second émetteur (68) et le second récepteur (70) sont montés de manière orientable en commun avec le premier émetteur (64) et le premier récepteur (66) par l'intermédiaire du dispositif d'orientation (74) autour de l'axe (72),
dans lequel le dispositif d'évaluation (76) peut être mis en fonctionnement pour estimer respectivement un second temps de propagation des secondes ondes réfléchies du second émetteur (68) au second récepteur (70) en différents points le long de la direction de mesure et pour ainsi déterminer un second profil de hauteur du sol (84) en dessous des plantes (82) le long de la direction de mesure,
et dans lequel le dispositif d'évaluation (76) peut être mis en fonctionnement pour déterminer, sur la base du premier profil de hauteur, du second profil de hauteur et de la densité des plantes (82), la quantité de plantes (82).

2. Equipement selon la revendication 1, dans lequel le dispositif d'évaluation (76) peut être mis en fonctionnement, lors de la détermination de la quantité de plantes (72), pour prendre également en compte la densité des plantes (82) qui est estimée sur la base d'intensités et/ou de temps de propagation de secondes ondes qui sont réfléchies par les plantes (82).

3. Equipement selon la revendication 1 ou 2, dans lequel le dispositif d'évaluation (76) peut être mis en fonctionnement pour estimer la densité massique des plantes (82) sur la base d'intensités et/ou de temps de propagation de secondes ondes qui sont réfléchies par les plantes (82) et/ou des intensités des premières ondes reçues et pour utiliser une détermination de la masse des plantes (82) sur la base de la quantité déterminée de plantes.

4. Equipement selon l'une quelconque des revendications précédentes, dans lequel les secondes ondes sont des ondes radar ou des micro-ondes.

5. Equipement selon l'une quelconque des revendications 1 à 4, dans lequel le dispositif d'évaluation (76) est connecté à un dispositif d'orientation et/ou à un dispositif de réglage de vitesse (78) et/ou à un dispositif destiné à régler un dispositif de récupération de produits de moissonnage (18) et/ou à un dispositif de traitement de végétaux et/ou de convoyage de végétaux et/ou à un dispositif d'enregistrement destiné notamment à enregistrer de manière géoréférencée les densités du couvert et/ou les quantités et/ou les surfaces moissonnées.

6. Equipement selon l'une quelconque des revendications 1 à 5, dans lequel les premier et second profils de hauteur sont acquis sur la base de la géométrie de montage des émetteurs (64, 68) et des récepteurs (66, 70) à différentes distances des émetteurs (64, 68) et des récepteurs (66, 70) et dans lequel le dispositif d'évaluation (76) peut être mis en fonctionnement pour mettre en tampon le profil de hauteur acquis antérieurement ou plus loin vers l'avant afin d'estimer la distance verticale par rapport à un profil de hauteur acquis ultérieurement et se trouvant pratiquement à la verticale de celui-ci et ainsi estimer le plus précisément possible la hauteur des plantes.

7. Moissonneuse (10) comportant un équipement selon l'une des revendications 1 à 6.
